# EUROPÄISCHE PATENTSCHRIFT

(11) **EP 4 263 298 B1**
(45) Veröffentlichungstag und Bekanntmachung des Hinweises auf die Patenterteilung: **11.09.2024**
(21) Anmeldenummer: 21835612.9
(22) Anmeldetag: 02.12.2021
(51) Int. Cl.: B60S 1/56, B08B 3/02, B08B 5/02, G02B 27/00, B60S 1/48

(54) **REINIGUNGSVORRICHTUNG, REINIGUNGS- UND SENSORSYSTEM FÜR EIN FAHRZEUG UND FAHRZEUG UND VERFAHREN ZUM REINIGEN EINER ZU REINIGENDEN OBERFLÄCHE EINES SENSORS**
CLEANING DEVICE, CLEANING AND SENSOR SYSTEM FOR A VEHICLE, AND VEHICLE, AND METHOD FOR CLEANING A SURFACE, WHICH IS TO BE CLEANED, OF A SENSOR
DISPOSITIF DE NETTOYAGE, SYSTÈME DE NETTOYAGE ET DE DÉTECTION POUR UN VÉHICULE ET VÉHICULE ET PROCÉDÉ PERMETTANT DE NETTOYER UNE SURFACE D'UN CAPTEUR QUI DOIT ÊTRE NETTOYÉE

(30) Priorität: 18.12.2020 DE 102020134282
(43) Veröffentlichungstag der Anmeldung: 25.10.2023
(73) Patentinhaber: ZF CV Systems Global GmbH, 3006 Bern (CH)
(72) Erfinder: COHRS, Jan, 30173 Hannover (DE); RICKE, Janik, 31311 Uetze (DE)
(74) Vertreter: Ohlendorf, Henrike
(86) Internationale Anmeldenummer: PCT/EP2021/083931
(87) Internationale Veröffentlichungsnummer: WO 2022/128502

(56) Entgegenhaltungen:
- EP-B1- 2 252 481
- WO-A1-2019/029804
- DE-A1- 102015 118 670
- US-A1- 2020 108 801
- US-A1- 2020 114 880
- US-A1- 2020 180 563
- US-A1- 2020 362 981

## Beschreibung

Die Erfindung betrifft eine Reinigungsvorrichtung gemäß dem Oberbegriff des Anspruchs 1. Die Erfindung betrifft weiter ein entsprechendes Reinigungs- und Sensorsystem und ein Fahrzeug sowie ein Verfahren zum Reinigen einer zu reinigenden Oberfläche eines Sensors.

Reinigungs- und Sensorsysteme mit einer Reinigungsvorrichtung zum Reinigen einer zu reinigenden Oberfläche eines Sensors, insbesondere in einem Fahrzeug, sind an sich bekannt.

So weist ein eingangs genanntes Reinigungs- und Sensorsystem eine Reinigungsvorrichtung für einen Sensor, insbesondere eines Fahrzeugs, auf. Die Reinigungsvorrichtung weist üblicherweise auf:
- eine Reinigungsdüse, ausgebildet zum Beaufschlagen einer zu reinigenden Oberfläche des mindestens einen Sensors mit einem Reinigungsfluid,
- ein Fluidstellmittel, insbesondere ein Fluidventil oder eine Pumpe, ausgebildet zum selektiven Bereitstellen des Reinigungsfluids an die Reinigungsdüse,
- einen Stellaktor zum Erzeugen einer Reinigungsbewegung der Reinigungsdüse.

Derartige Reinigungsvorrichtungen ermöglichen vorteilhaft eine Reinigung der Sensoren von Verschmutzungen, die im Betrieb eines Fahrzeugs auftreten und gewährleisten somit eine sichere Funktionsweise der Sensoren, beispielsweise Kameras oder LIDAR-Sensoren.

Generell besteht ein Zielgrößenkonflikt bei der Anordnung einer Reinigungsdüse in Bezug, d.h. relativ zu der zu reinigenden Oberfläche des Sensors. Zum einen soll der Aufbau möglichst kompakt und unauffällig sein, zum anderen jedoch ist ein vorteilhafter, insbesondere möglichst senkrechter, Auftreffwinkel des Reinigungsfluids auf die zu reinigende Oberfläche wünschenswert zum Erzeugen einer hohen Reinigungsleistung.

Diesbezüglich existieren im Bereich von Autoscheinwerfern bereits Ansätze für Reinigungsvorrichtungen mit ausfahrbaren Düsen. So beschreibt die DE 3828999 A1 eine Scheibenwaschanlage für Kraftfahrzeuge mit einer Druckerzeugungseinrichtung zur Förderung der Reinigungsflüssigkeit, einem Ventil und einer Düse, die von einem Düsenträger aus einer zurückversetzten Ruhelage in eine Arbeitsstellung ausfahrbar ist, wobei das Ventil erst in ausgefahrener Stellung des Düsenträgers geöffnet wird.

Auch in der DE 19517761 A1 und in der DE 19920470 A1 sind vergleichbare Reinigungsvorrichtungen beschrieben.

Die US 2020/108801 A1 offenbart den Gegenstand des Oberbegriffs des Anspruchs 1.

Problematisch ist weiterhin eine effektive Reinigung von Sensoren mit einer relativ großen Oberfläche oder eine Reinigung von mehreren, beispielsweise in einem Gehäuse untergebrachten, Sensoren mit einer Reinigungsvorrichtung. Problematisch ist weiterhin eine effiziente Reinigung im Sinne einer Reinigungsfluid, insbesondere Reinigungsflüssigkeit, sparenden Funktionsweise der Reinigungsvorrichtung.

Wünschenswert ist es daher, die Funktion einer Reinigungsvorrichtung hinsichtlich mindestens einem der genannten Probleme zu verbessern.

An dieser Stelle setzt die Erfindung an, deren Aufgabe es ist, eine verbesserte Vorrichtung und Verfahren anzugeben, das hinsichtlich mindestens eines der genannten Probleme verbessert ist.

Insbesondere soll eine effektive Reinigung von Sensoren mit einer relativ großen Oberfläche oder von mehreren Sensoren und/oder eine effiziente Reinigung im Sinne einer Reinigungsfluid sparenden Funktionsweise verbessert ermöglicht werden.

Die Aufgabe, betreffend die Vorrichtung, wird durch die Erfindung mit einer Reinigungsvorrichtung des Anspruchs 1 gelöst.

Die Erfindung geht aus von einer eingangs genannten Reinigungsvorrichtung für ein Fahrzeug, aufweisend:
- mindestens eine Reinigungsdüse, ausgebildet zum Beaufschlagen einer zu reinigenden Oberfläche mindestens eines Sensors mit einem Reinigungsfluid,
- ein Fluidstellmittel, insbesondere ein Fluidventil oder eine Pumpe, ausgebildet zum selektiven Bereitstellen des Reinigungsfluids an die Reinigungsdüse,
- einen Stellaktor zum Erzeugen einer Reinigungsbewegung der Reinigungsdüse.

Erfindungsgemäß ist bei der Reinigungsvorrichtung vorgesehen, dass
- die Reinigungsvorrichtung ein Schaltmittel zum Steuern des Stellaktors aufweist, derart, dass
- die Reinigungsbewegung unabhängig von dem Fluidstellmittel erzeugt werden kann.

Die Aufgabe, betreffend die Vorrichtung, wird durch die Erfindung auch mit einem Reinigungs- und Sensorsystem des Anspruchs 10 gelöst.

Das Reinigungs- und Sensorsystem für ein Fahrzeug weist einen Sensor und eine Reinigungsvorrichtung gemäß der Erfindung auf und eine Versorgungseinrichtung und eine Steuereinheit, die zur Steuerung der Reinigungsvorrichtung ausgebildet ist. Die Versorgungseinrichtung kann beispielsweise eine Druckluftquelle und/oder einen Tank aufweisen.

Die Aufgabe, betreffend das Verfahren, wird durch die Erfindung auch mit einem Verfahren des Anspruchs 13 gelöst.

Das Verfahren zum Reinigen einer zu reinigenden Oberfläche eines Sensors ist gekennzeichnet durch die Schritte:
- Erzeugen einer Reinigungsbewegung einer Reinigungsdüse, und Beaufschlagen der zu reinigenden Oberfläche mit einem Reinigungsfluid, insbesondere einer Reinigungsflüssigkeit und/oder einer Druckluft, während der Reinigungsbewegung,
- Erzeugen einer, zur Reinigungsbewegung gegenläufigen, Einfahrbewegung, und vorteilhaft Beaufschlagen der zu reinigenden Oberfläche mit einem Reinigungsfluid, insbesondere einer Druckluft, während der Einfahrbewegung.

Die Erfindung geht aus von der Erkenntnis, dass ein Stellaktor zum Erzeugen einer Reinigungsbewegung einer Reinigungsdüse vorteilhaft ist. Für die Reinigung von Sensoren, insbesondere von einem Sensor mit relativ großer Oberfläche und/oder einer Anordnung von mehreren Sensoren, hat die Erfindung erkannt, dass eine derart mit einem Stellaktor bewegbare Reinigungsdüse vorteilhaft ist um eine relativ große zur reinigende Oberfläche und/oder eine Anordnung von mehreren Sensoren effektiv zur reinigen, insbesondere in Reinigungsfluid sparender Weise.

Dies wird vorteilhaft erreicht durch ein Schaltmittel zum Steuern des Stellaktors. Durch ein Schaltmittel und ein davon unabhängig steuerbares Fluidstellmittel kann vorteilhaft ein Bereitstellen des Reinigungsfluids unabhängig von der Reinigungsbewegung erfolgen. Hierdurch kann die Reinigungsdüse, und mit ihr insbesondere ein Reinigungsfluidstrahl, über eine zu reinigende Oberfläche eines Sensors bewegt werden, vorteilhaft während eine Beaufschlagung der zu reinigenden Oberfläche mit dem Reinigungsfluid erfolgt. Die Beaufschlagung mit einem Reinigungsfluid kann unabhängig von der Reinigungsbewegung erfolgen.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Im Rahmen einer vorteilhaften Weiterbildung ist vorgesehen, dass die Reinigungsvorrichtung ein erstes Fluidstellmittel für ein erstes Reinigungsfluid und ein zweites Fluidstellmittel für ein zweites Reinigungsfluid aufweist. Insbesondere ist das erste Reinigungsfluid Druckluft und das zweite Reinigungsfluid eine Reinigungsflüssigkeit. Mittels eines ersten Fluidstellmittels und eines zweiten Fluidstellmittels können vorteilhaft zwei Reinigungsfluide unabhängig voneinander an einer Reinigungsdüse bereitgestellt werden. Auf diese Weise ist eine verbesserte Reinigung der zu reinigenden Oberfläche möglich. Beispielsweise kann in einem Reinigungsverfahren zunächst die zu reinigende Oberfläche mit Reinigungsflüssigkeit als zweitem Reinigungsfluid beaufschlagt werden, sodass Schmutzpartikel eingereicht werden können und im Anschluss die zu reinigende Oberfläche mit Druckluft als erstem Reinigungsfluid beaufschlagt werden zum Entfernen der aufgeweichten Schmutzpartikel.

Im Rahmen einer vorteilhaften Weiterbildung ist vorgesehen, dass das Reinigungsfluid, insbesondere das erste Reinigungsfluid, Druckluft ist, und insbesondere das Fluidstellmittel ein 2/2-Wegeventil ist. Insbesondere ist der fluidische Druckzylinder ein pneumatischer Druckzylinder. Das 2/2-Wegeventil ist vorteilhaft als 2/2-Wege-Magnetventil gebildet. Das 2/2-Wegeventil ist insbesondere normal schließend ausgebildet, das heißt in einem nicht angesteuerten, insbesondere stromlosen, Zustand in einer Sperrstellung. Im Rahmen der Erfindung kann ein 2/2-Wegeventil als pneumatisches 2/2-Wegeventil für ein gasförmiges Reinigungsfluid, insbesondere Druckluft, ausgebildet sein oder als ein hydraulisches 2/2-Wegeventil für ein flüssiges Reinigungsfluid, insbesondere Reinigungsflüssigkeit, ausgebildet sein. Das 2/2-Wegeventil kann in Weiterbildungen auch als Relaisventil, insbesondere pneumatisches oder hydraulisches Relaisventil, ausgebildet sein.

Im Rahmen einer vorteilhaften Weiterbildung ist vorgesehen, dass ein das Reinigungsfluid, insbesondere das zweite Reinigungsfluid, Reinigungsflüssigkeit ist und insbesondere der fluidische Druckzylinder ein hydraulischer Druckzylinder ist. Das zweite Fluidstellmittel ist vorteilhaft als ein 2/2-Wegeventil, vorteilhaft als 2/2-Wege-Magnetventil, gebildet. In anderen bevorzugten Weiterbildungen ist das zweite Fluidstellmittel als Pumpe, vorteilhaft als elektrische Pumpe, gebildet.

Erfindungsgemäß ist vorgesehen, dass der Stellaktor als fluidischer Druckzylinder, insbesondere pneumatischer Druckzylinder ausgebildet ist mit einem Druckeingang zum Aufnehmen eines Aktuierungsdrucks zum Erzeugen der Reinigungsbewegung. Durch einen derartigen fluidischen Druckzylinder wird mittels eines bereits vorhandenen, unter Druck stehenden Reinigungsfluids, dass am Druckeingang aufgenommen wird, die Reinigungsbewegung erzeugt werden. Auf diese Weise kann vorteilhaft ein separater Antrieb zur Erzeugung der Reinigungsbewegung eingespart werden. Durch das Schaltmittel kann der fluidische Druckzylinder vorteilhaft unabhängig von dem Bereitstellen des Reinigungsfluids an der Reinigungsdüse angesteuert werden.

Im Rahmen einer vorteilhaften Weiterbildung ist vorgesehen, dass das Schaltmittel ein 3/2-Wegeventil ist. Das 3/2-Wegeventil kann vorteilhaft als pneumatisches 3/2-Wegeventil zum Schalten eines gasförmigen Reinigungsfluid, insbesondere Druckluft, ausgebildet sein. In Weiterbildungen kann das pneumatische 3/2-Wegeventil vorteilhaft als mittels eines gasförmigen Mediums schaltbares, d.h. pneumatisch schaltbares, Relaisventil ausgebildet sein. Das 3/2-Wegeventil kann vorteilhaft als hydraulisches 3/2-Wegeventil ausgebildet sein. Das hydraulische 3/2-Wegeventil kann vorteilhaft zum Schalten eines flüssigen Reinigungsfluids, insbesondere eine Reinigungsflüssigkeit, ausgebildet sein. Das 3/2-Wegeventil ist vorteilhaft als 3/2-Wege-Magnetventil ausgebildet. In Weiterbildungen kann das hydraulische 3/2-Wegeventil vorteilhaft als mittels einer Flüssigkeit schaltbares, d.h. hydraulisch schaltbares, Relaisventil ausgebildet sein. Das 3/2-Wegeventil ist vorteilhaft normal entlüftend ausgebildet, das heißt in einem nicht angesteuerten, insbesondere stromlosen, Zustand in einer Entlüftungsstellung. Die Entlüftungsstellung ermöglicht bei einem als fluidischen Druckzylinder ausgebildeten Stellaktor vorteilhaft ein Entlüften des Druckeingangs insbesondere zum Veranlassen der Einfahrbewegung des Düsenschafts.

Im Rahmen einer vorteilhaften Weiterbildung ist vorgesehen, dass der Stellaktor eine Rückstellfeder aufweist, die sich gegen die Reinigungsbewegung verformt und ausgebildet ist zum Erzeugen einer Einfahrbewegung. Durch eine Rückstellfeder, die sich während der Reinigungsbewegung verformt und somit Energie speichert zum Erzeugen der Einfahrbewegung, kann vorteilhaft ein Antrieb zum Erzeugen der Einfahrbewegung eingespart werden.

Im Rahmen einer vorteilhaften Weiterbildung ist vorgesehen, dass der Stellaktor als Linearantrieb ausgebildet ist, wobei der Linearantrieb ausgebildet ist zum Erzeugen der Reinigungsbewegung, und das Schaltmittel als elektrischer Motor ausgebildet ist. Vorteilhaft ist der Linearantrieb ausgebildet zum Erzeugen einer Einfahrbewegung. Mittels eines derart mechanisch, insbesondere elektromechanisch, angetriebenen Stellaktor kann vorteilhaft ein selektives Anfahren einzelner Düsenpositionen umgesetzt werden. Hierzu kann das Stellmittel einen elektrischen Motor, insbesondere einen indexierten Motor mit Drehgeber oder dergleichen Positionsgeber, aufweisen. Der Linearantrieb ist vorteilhaft als Spindelantrieb oder Schraubenantrieb ausgebildet oder weist ein geeignetes Getriebe zum Übersetzen einer von einem elektrischen Motor bereitgestellten Drehbewegung in eine lineare Bewegung auf.

Im Rahmen einer bevorzugten Weiterbildung ist eine Steuereinheit vorgesehen zum Steuern des Schaltmittels und/oder des mindestens einen Fluidstellmittels, insbesondere zum Ausführen eines Reinigungsverfahrens durch das zeitlich getaktete Steuern des Schaltmittels und des Fluidstellmittels. Die Steuereinheit ist vorteilhaft signalführend mit mindestens einem, vorteilhaft sämtlichen, Fluidstellmittel und/oder Schaltmitteln der Reinigungsvorrichtung verbunden. Die Steuereinheit ist vorteilhaft als elektronische Steuereinheit (ECU) ausgebildet.

Im Rahmen einer bevorzugten Weiterbildung ist eine Abbruch-Bestimmungseinheit vorgesehen, die ausgebildet ist, in Abhängigkeit eines von dem Sensor bereitgestellten Sensorsignals eine Abbruch-Düsenposition und/oder einen Abbruchzeitpunkt anzugeben. Die Abbruch-Bestimmungseinheit ist insbesondere ausgebildet, das Vorhandensein von einem oder mehreren Schmutzpartikeln zu erkennen und in Abhängigkeit dessen eine - zu der Position der Schmutzpartikel korrespondierende Abbruch-Düsenposition anzugeben. Durch eine Abbruch-Bestimmungseinheit kann vorteilhaft Zeit und/oder Reinigungsfluid eingespart werden und trotzdem eine effektive, insbesondere bedarfsgerechte, Reinigung eines Sensors ermöglicht werden.

Im Rahmen einer bevorzugten Weiterbildung ist eine Ziel-Bestimmungseinheit vorgesehen, die ausgebildet ist, eine oder mehrere Ziel-Düsenpositionen oder eine oder mehrere Ziel-Düsenzonen zu bestimmen. Die Ziel-Bestimmungseinheit ist vorteilhaft ausgebildet, auf der Basis des Kamerasignals Schmutzpartikel und deren Position auf der zu reinigenden Oberfläche zu erkennen, und in Abhängigkeit dieser Positionen der Schmutzpartikel eine oder mehrere Ziel-Düsenpositionen, oder eine oder mehrere Ziel-Düsenzonen, bereitzustellen. Insbesondere werden die eine oder mehreren Ziel-Düsenpositionen, oder eine oder mehreren Ziel-Düsenzonen der Steuereinheit der Reinigungsvorrichtung bereitgestellt. Vorteilhaft kann die Ziel-Bestimmungseinheit ausgebildet sein zum Bestimmen einer Ziel-Reinigungsfluidmenge, die an einer Ziel-Düsenposition oder einer Ziel-Düsenzone beaufschlagt wird. Die Ziel-Reinigungsfluidmenge kann vorteilhaft in Abhängigkeit der Verschmutzung, insbesondere der Größe des Schmutzpartikels oder der Anordnung von Schmutzpartikeln, bestimmt werden.

Die Reinigungsflüssigkeit F ist vorteilhaft durch Wasser gebildet. Vorteilhaft können dem Wasser Reinigungszusätze hinzugefügt sein.

Als 2/2-Wegeventile ausgebildete Fluidstellmittel sind bevorzugt als normal schließende Ventile ausgebildet, die sich bevorzugt in einem nicht angesteuerten, insbesondere stromlosen, Zustand in einer Sperrstellung befinden. Insbesondere ist die mindestens eine Reinigungsdüse starr mit dem Düsenschaft verbunden.

Im Rahmen einer bevorzugten Weiterbildung ist die Reinigungsvorrichtung ausgebildet zum selektiven Beaufschlagen mit einem oder mehreren Reinigungsfluiden an einen oder mehreren einzelnen Ziel-Düsenpositionen. In einer derartigen Weiterbildung ist vorteilhaft ein Lösen einzelner, lokaler Verschmutzungen möglich in Reinigungsfluid sparender Weise. Besonders vorteilhaft ist auch ein selektives Beaufschlagen mit einem oder mehreren Reinigungsfluiden von mehreren, zusammenhängenden Ziel-Düsenpositionen, möglich, die zusammen eine Ziel-Düsenzone bilden. Derartige Weiterbildungen zum selektiven, insbesondere steuerbaren, Beaufschlagen werden vorteilhaft durch die unabhängige Ansteuerung von dem Schaltmittel und dem mindestens einen Fluidstellmittel gemäß dem Konzept der Erfindung ermöglicht.

Die Erfindung führt in einem weiteren Aspekt auch auf ein Fahrzeug, insbesondere ein Nutzfahrzeug oder ein PKW, aufweisend eine Reinigungsvorrichtung gemäß dem ersten Aspekt der Erfindung. Bei dem Fahrzeug gemäß dem zweiten Aspekt der Erfindung werden die Vorteile der Reinigungsvorrichtung gemäß dem ersten Aspekt der Erfindung vorteilhaft genutzt.

In einer vorteilhaften Weiterbildung des Verfahrens, das heißt des Reinigungsverfahrens, erfolgt ein Beaufschlagen der zu reinigenden Oberfläche mit einer Reinigungsflüssigkeit während der Reinigungsbewegung, insbesondere durchgehend während der vollständigen Reinigungsbewegung, und ein Beaufschlagen der zu reinigenden Oberfläche mit einer Druckluft während der Einfahrbewegung, insbesondere durchgehend während der vollständigen Einfahrbewegung. In einer vorteilhaften Weiterbildung des Verfahrens ist ein Warteschritt vorgesehen zwischen der Reinigungsbewegung und der Einfahrbewegung, oder zwischen einer Einfahrbewegung und einer Reinigungsbewegung.

In einer vorteilhaften Weiterbildung des Verfahrens erfolgt ein Beaufschlagen der zu reinigenden Oberfläche an mindestens einer Ziel-Düsenposition und/oder mindesten einer Ziel-Düsenzone.

In einer vorteilhaften Weiterbildung des Verfahrens erfolgt ein Beaufschlagen mit einer Ziel-Reinigungsfluidmenge, die insbesondere in Abhängigkeit von einem oder mehreren erkannten Schmutzpartikeln auf der zu reinigenden Oberfläche bestimmt wird. Bei relativ großen erkannten Schmutzpartikeln wird entsprechend eine relativ große Ziel-Reinigungsfluidmenge gewählt.

In einer vorteilhaften Weiterbildung des Verfahrens ist ein vorzeitiges Beenden der Reinigungsbewegung vorgesehen in Abhängigkeit einer Abbruch-Düsenposition und/oder eines Abbruchzeitpunkts. Dies beinhaltet insbesondere, dass die Reinigungsbewegung vor dem Erreichen der Endstellung beendet wird, wenn eine Abbruch-Düsenposition und/oder ein Abbruchzeitpunkt vorgegeben wird. Die Abbruch-Düsenposition und/oder der Abbruchzeitpunkt wird vorteilhaft in Abhängigkeit eines Sensorsignals des Sensors bestimmt.

Es soll verstanden werden, dass die Reinigungsvorrichtung gemäß dem ersten Aspekt der Erfindung, das Fahrzeug gemäß dem zweiten Aspekt der Erfindung und das Verfahren gemäß dem dritten Aspekt der Erfindung gleiche und ähnliche Unteraspekte aufweisen, wie sie insbesondere in den abhängigen Ansprüchen niedergelegt sind. Insofern wird für die Weiterbildung eines Aspekts der Erfindung auch auf die Weiterbildungen der anderen Aspekte der Erfindung verwiesen.

Ausführungsformen der Erfindung werden nun nachfolgend anhand der Zeichnung im Vergleich zum Stand der Technik, welcher zum Teil ebenfalls dargestellt ist, beschrieben. Diese soll die Ausführungsformen nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein.

Weitere Vorteile, Merkmale und Einzelheiten der Erfindung ergeben sich aus der nachfolgenden Beschreibung der bevorzugten Ausführungsformen sowie anhand der Zeichnung, diese zeigt in:
- Fig. 1A, Fig. 1B, Fig. 1C: eine erste bevorzugte Ausführungsform einer Reinigungsvorrichtung gemäß dem Konzept der Erfindung,
- Fig. 2: zweite bevorzugte Ausführungsform einer weiteren Reinigungsvorrichtung gemäß dem Konzept der Erfindung,
- Fig. 3: eine dritte bevorzugte Ausführungsform einer noch weiteren Reinigungsvorrichtung gemäß dem Konzept der Erfindung,
- Fig. 4A, Fig. 4B: schematisch eine mögliche erste Einbauposition einer Reinigungsvorrichtung,
- Fig. 4C: eine weitere vorteilhafte zweite Einbauposition,
- Fig. 5A, Fig. 5B: schematisch eine vorteilhafte Reinigungsdüse,
- Fig. 6A: eine Ausführungsform eines bevorzugten Reinigungsverfahrens,
- Fig. 6B: eine weitere Ausführungsform eines bevorzugten weiteren Reinigungsverfahrens,
- Fig. 7: ein Fahrzeug mit einer Reinigungsvorrichtung gemäß dem Konzept der Erfindung.

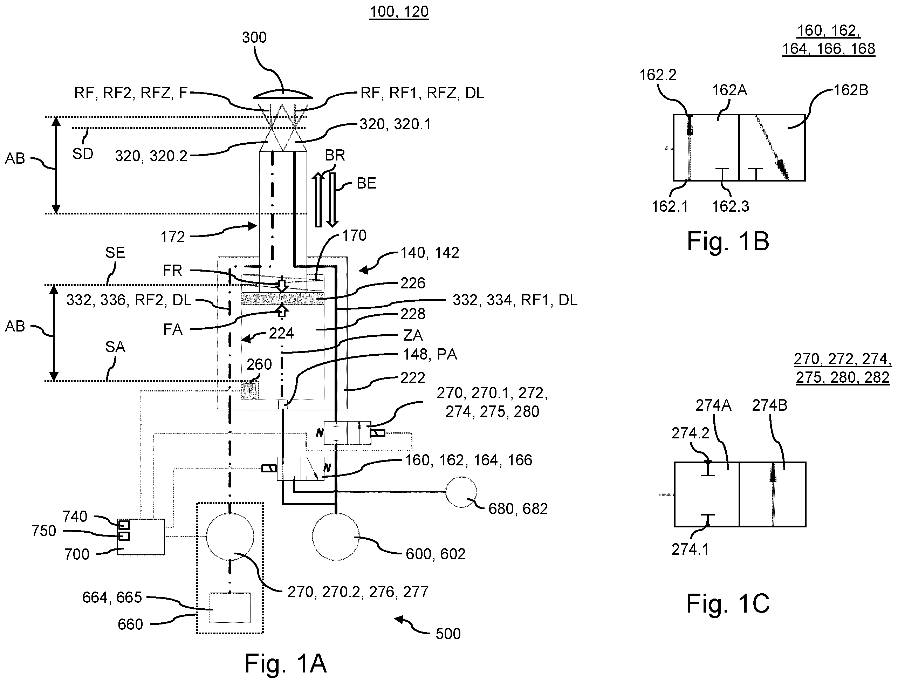

Fig. 1 zeigt eine erste bevorzugte Ausführungsform einer Reinigungsvorrichtung 100 gemäß dem Konzept der Erfindung. Die Reinigungsvorrichtung 100 weist einen als fluidischen Druckzylinder 142 ausgebildeten Stellaktor 140 zum Erzeugen einer Reinigungsbewegung BR auf. Der fluidische Druckzylinder 142 weist einen Druckeingang 148 zum Annehmen eines Aktuierungsdrucks PA auf.

Der fluidische Druckzylinder 142 weist ein Zylindergehäuse 222 mit einem Zylinderinnenraum 228 auf, wobei der Zylinderinnenraum 228 vorteilhaft zylindrisch entlang einer Zylinderachse ZA ausgebildet ist. In dem Zylinderinnenraum 228 ist ein Druckstempel 226 translatorisch entlang der Zylinderachse ZA bewegbar aufgenommen. Der Durchmesser des Druckstempels 226 entspricht dem Innendurchmesser des Zylinderinnenraums 228, sodass sich der Druckstempel 226 mit einer Innenwandung 224 des Zylinderinnenraums 228 in einem druckdichten Kontakt befinden. Optional kann der Druckstempel 226 einen an seiner Mantelfläche angeordneten Dichtring für eine bessere Abdichtung gegenüber der Innenwandung 224 aufweisen.

Vorliegend weist die Reinigungsvorrichtung 100 ein Schaltmittel 160 auf, dass als 3/2-Wegeventil 162, hier konkret als 3/2-Wege-Magnetventil 164 ausgebildet ist. Das 3/2-Wegeventil 162 ist ausgebildet zum steuerbaren Belüften des Druckeingangs 148 zum Bereitstellen des Aktuierungsdrucks PA.

Das 3/2-Wegeventil 162 ist in der in Fig. 1A gezeigten Ausführungsform als pneumatisches 3/2-Wegeventil 166 ausgebildet. Das 3/2-Wegeventil 162 weist, wie in Fig. 1B gezeigt, einen ersten Anschluss 162.1 auf, der pneumatisch mit einer Druckluftquelle 600, vorliegend einem Kompressor 602, verbunden ist. Das 3/2-Wegeventil 162 weist einen zweiten Anschluss 162.2 auf, der pneumatisch mit dem Druckeingang 148 verbunden ist. Das 3/2-Wegeventil 162 weist einen dritten Anschluss 162.3 auf, der pneumatisch mit einer, insbesondere in eine Umgebung 682 führende, Entlüftung 680 verbunden ist. In einer Belüftungsstellung 162A des 3/2-Wegeventils 162 ist der erste Anschluss 162.1 mit dem zweiten Anschluss 162.2 pneumatisch verbunden. In einer Entlüftungsstellung 162B des 3/2-Wegeventils 162 ist der zweite Anschluss 162.2 mit dem dritten Anschluss 162.3 pneumatisch verbunden und insbesondere der erste Anschluss 162.1 gesperrt. Im Rahmen der Erfindung kann ein 3/2-Wegeventil 162 als pneumatisches 3/2-Wegeventil für ein gasförmiges Reinigungsfluid RF, insbesondere Druckluft DL, ausgebildet sein oder als ein hydraulisches 3/2-Wegeventil für ein flüssiges Reinigungsfluid RF, insbesondere Reinigungsflüssigkeit F, ausgebildet sein.

Bei einem Beaufschlagen des Druckeingangs 148 mit einem Aktuierungsdruck PA, insbesondere, wenn sich das 3/2-Wegeventil 162 in der Belüftungsstellung 162A befindet, resultiert eine auf den Druckstempel 226 wirkende Stellkraft FA. Aufgrund der axialen Bewegbarkeit des Druckstempels 226 resultiert eine axiale Bewegung des Druckstempels 226 in Form einer Reinigungsbewegung BR, bis zu einer Endstellung SE. Die Reinigungsvorrichtung 100 weist weiter eine Rückstellfeder 170 auf, die mit dem Druckstempel 226 befestigt ist, und sich verformt, wenn der Druckstempel 226 sich aus seiner Ausgangsstellung SA bewegt. Durch das Verformen der Rückstellfeder 170 resultiert eine auf den Druckstempel 226 wirkende Rückstellkraft FR, die der Stellkraft FA entgegen gerichtet ist.

Die Reinigungsvorrichtung 100 weist eine erste Reinigungsdüse 320.1 und eine zweite Reinigungsdüse 320.2 auf, die beide an einem Düsenschaft 172 befestigt sind. Der Düsenschaft 172 ist fest mit dem Druckstempel 226 verbunden, wodurch die von dem Düsenstempel 226 erzeugte Reinigungsbewegung BR auf die Reinigungsdüse 320, hier die erste Reinigungsdüse 320.1 und die zweite Reinigungsdüse 320.2, übertragen wird. In allen Ausführungsformen kann die Reinigungsvorrichtung 100 auch statt einzelnen Reinigungsdüsen 320.1, 320.2 eine gemeinsame Reinigungsdüse 320 für mehrere Reinigungsfluide RF, insbesondere für Druckluft DL und Reinigungsflüssigkeit F, aufweisen, insbesondere in Form einer Kombinationsdüse mit einem Düsenkörper, der jeweils eine Düsenöffnung für ein Reinigungsfluid RF aufweist.

Bei einem Entlüften des Druckeingangs 148, insbesondere wenn sich das 3/2-Wegeventil 162 in der Entlüftungsstellung 162B befindet, wirkt keine Rückstellkraft FA mehr auf den Druckstempel 226 und der Druckstempel 226 wird, zusammen mit dem Düsenschaft 172 und den Reinigungsdüse 320.1, 320.2, durch die Rückstellkraft FR in einer Einfahrbewegung BE zurück in seine Ausgangsstellung SA bewegt. Der Stellaktor 140 ist somit ausgebildet zum Zurücklegen eines Stellhubs AB zwischen der Ausgangsstellung SA und der Endstellung SE.

Die Reinigungsvorrichtung 100 weist ein erstes Fluidstellmittel 270.1 in Form eines Fluidventils 272 für ein erstes Reinigungsfluid RF1 in Form von Druckluft DL auf. Die Reinigungsvorrichtung 100 weist ein zweites Fluidstellmittel 270.2 in Form einer Pumpe 276 für ein zweites Reinigungsfluid RF2 in Form von Reinigungsflüssigkeit F auf.

Das erste Fluidstellmittel 270.1 ist über eine erste Fluidleitung 332 in Form einer Druckluft-Fluidleitung 334 mit der ersten Reinigungsdüse 320.1 fluidführend verbunden. Das zweite Fluidstellmittel 270.2 ist über eine zweite Fluidleitung 332 in Form einer Flüssigkeits-Fluidleitung 336 mit der zweiten Reinigungsdüse 320.2 fluidführend verbunden. Die Fluidleitungen 332, insbesondere die Druckluft-Fluidleitung 334 und die Flüssigkeits-Fluidleitung 336, können vorteilhaft wie hier gezeigt als Kanäle oder Bohrungen in der Reinigungsvorrichtung 100, insbesondere in dem Zylindergehäuse 221 und dem Düsenschaft 172 ausgebildet sein. In anderen vorteilhaften Ausführungsformen sind die Fluidleitungen 332 als Schläuche, Rohre oder dergleichen Leitungskörper ausgebildet. Auch sind Mischformen bei einer Fluidleitung vorteilhaft, beispielsweise ein vom Fluidstellmittel zum Düsenschaft führender Leitungskörper, insbesondere Schlauch, der an eine im Düsenschaft zur Reinigungsdüse verlaufende Bohrung anschließt. Durch einen derartigen, teilweisen Abschnitt der Fluidleitung, der flexibel ausgebildet ist, kann vorteilhaft eine Bewegung des Düsenschafts relativ zum übrigen Teil der Reinigungsvorrichtung ermöglicht werden.

Das erste Fluidstellmittel 270.1 ist als Fluidventil 272 in Form eines 2/2-Wegeventils 274 ausgebildet. Das 2/2-Wegeventil 274 ist bevorzugt, wie hier gezeigt, als 2/2-Wege-Magnetventil 275 ausgebildet. Das 2/2-Wegeventil 274 weist, wie in Fig. 1C gezeigt, einen ersten Anschluss 274.1 auf, der mit der Druckluftquelle 600, hier dem Kompressor 602, pneumatisch verbunden ist. Das 2/2-Wegeventil 274 weist einen zweiten Anschluss 274.2 auf, der mit der Reinigungsdüse 320, hier der ersten Reinigungsdüse 320.1, pneumatisch verbunden ist. In einer ersten Sperrstellung 274A ist eine pneumatische Verbindung zwischen dem ersten Anschluss 274.1 und dem zweiten Anschluss 274.2 unterbrochen. In einer zweiten Öffnungsstellung 274B ist der erste Anschluss 274.1 mit dem zweiten Anschluss 274.2 pneumatisch verbunden. Im Rahmen der Erfindung kann ein 2/2-Wegeventil 274 als pneumatisches 2/2-Wegeventil 280 für ein gasförmiges Reingungsfluid RF, insbesondere Druckluft DL, ausgebildet sein oder als ein hydraulisches 2/2-Wegeventil 282 für ein flüssiges Reinigungsfluid RF, insbesondere Reinigungsflüssigkeit F, ausgebildet sein.

Das zweite Fluidstellmittel 270.2, nämlich die Pumpe 276, ist vorteilhaft wie hier in Form einer elektrischen Pumpe 277 gebildet und fluidführend mit einer Flüssigkeitsquelle 660 in Form eines Flüssigkeitstanks 664 verbunden. Der Flüssigkeitstank 664 ist, wie hier dargestellt, insbesondere durch einen Wischwassertank 665 gebildet.

Insofern ist insgesamt in Fig. 1A ein Reinigungs- und Sensorsystem 120 für ein Fahrzeug 1000 dargestellt, das einen Sensor 300 und eine Reinigungsvorrichtung 100 gemäß dem Konzept der Erfindung aufweist. Das Reinigungs- und Sensorsystem 120 weist außerdem eine Versorgungseinrichtung 500 auf. Die Versorgungseinrichtung 500 kann wie erläutert eine Druckluftquelle 600 und/oder einen Flüssigkeitstank 664 aufweisen.

Das Reinigungs- und Sensorsystem 120 weist außerdem eine Steuereinheit 700 auf, die zur Steuerung der Reinigungsvorrichtung 100 ausgebildet ist, wie dies nachfolgend erläutert ist. Die Reinigungsvorrichtung 100 weist demnach eine elektrische Steuereinheit 700 auf, die zur Steuerung der Reinigungsvorrichtung 100 ausgebildet ist und hierfür mit den wesentlichen steuerbaren Komponenten signalführend verbunden ist. Vorliegend ist die Steuereinheit 700 signalführend mit dem Schaltmittel 160 in Form des 3/2-Wegeventils 162, dem ersten Fluidstellmittel 270.1 in Form des 2/2-Wegeventils 274 und dem zweiten Fluidstellmittel 270.2 in Form der Pumpe 276 signalführend verbunden.

Die Reinigungsvorrichtung 100, insbesondere der fluidische Druckzylinder 142, kann vorteilhaft wie hier gezeigt einen Drucksensor 260 aufweisen, welcher fluidführend mit dem Zylinderinnenraum 228 verbunden ist oder in diesem angeordnet ist. Mittels eines Drucksensors 260 kann vorteilhaft der im Zylinderinnenraum 228 herrschende Druck, insbesondere der Aktuierungsdruck PA bestimmt werden. Durch den Drucksensor 260 kann vorteilhaft die Funktion des fluidischen Druckzylinders 142 und/oder des Schaltmittels 160 plausibilisiert werden. Durch den Drucksensor 260 kann vorteilhaft auf Basis des ermittelten Aktuierungsdrucks PA eine Düsenposition SD bestimmt werden, insbesondere auf Basis einer vorher messtechnisch bestimmten Zuordnung von Aktuierungsdrücken PA zu einer jeweiligen Düsenposition SD.

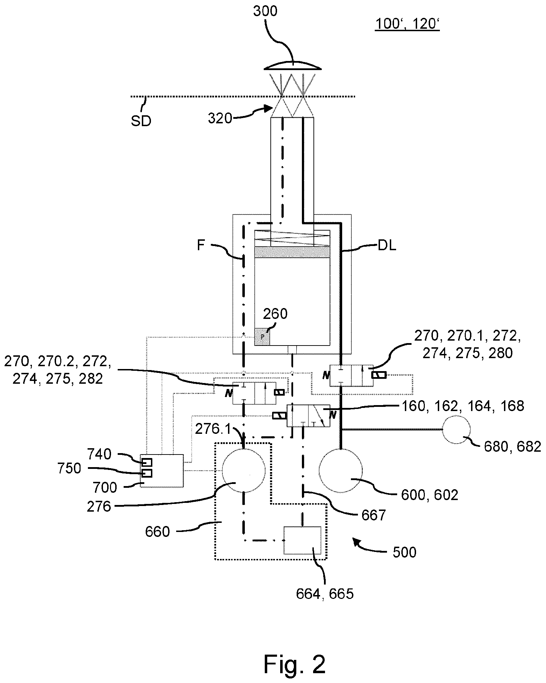

Fig. 2 zeigt eine zweite bevorzugte Ausführungsform einer weiteren Reinigungsvorrichtung 100' eines weiteren Sensor- und Reinigungssystems 120`, bei der im Unterschied zu der in Fig. 1A gezeigten Reinigungsvorrichtung 100 die Pumpe 276 zum Erzeugen des Aktuierungsdrucks PA am Druckeingang 148 des fluidischen Druckzylinders 142 genutzt wird. Ein Pumpenausgang 276.1 ist dafür fluidführend mit dem ersten Anschluss 162.1 des als 3/2-Wegeventil 162 ausgebildeten Schaltmittels 160 verbunden.

Das erste Fluidstellmittel 270.1 zum selektiven Bereitstellen von Druckluft DL ist analog zu der in Fig. 1A gezeigten Reinigungsvorrichtung 100 als Fluidventil 272, nämlich als 2/2-Wegeventil 274 in Form eines 2/2-Wege-Magnetventils 275 ausgebildet.

Weiterhin weist die weitere Reinigungsvorrichtung 100' ein zweites Fluidstellmittel 270.2 in Form eines Fluidventils 272, nämlich eines 2/2-Wegeventils 274 in Form eines 2/2-Wege-Magnetventils 275 auf, dass wie hier gezeigt bevorzugt als normal schließendes Ventil ausgebildet ist. Im Unterschied zu der in Fig. 1 gezeigten Reinigungsvorrichtung 100 ist somit ein separates Fluidventil 272 als zweites Fluidstellmittel 270.2, insbesondere weil die Pumpe 276 ebenfalls zur Versorgung des Schaltmittels 160, das heißt zur Erzeugung des Aktuierungsdrucks PA, eingesetzt wird. Mit dem zweiten Fluidstellmittel 270.2 kann die Reinigungsflüssigkeit selektiv an der Reinigungsdüse 320 bereitgestellt werden, vorliegend in dem eine fluidführend der Verbindung zwischen dem Pumpenausgang 276.1 und der Reinigungsdüse 320 durch das 2/2-Wegeventil 274 selektiv geöffnet und gesperrt werden kann.

Das als 3/2-Wegeventil 162 ausgebildete Schaltmittel 160 ist in der weiteren Reinigungsvorrichtung 100' ein hydraulisches 3/2-Wegeventil 168, da es zum Schalten der Reinigungsflüssigkeit F eingesetzt wird. Als Besonderheit ist der dritte Anschluss 162.3 in dieser Ausführungsform über eine Rückflussleitung 667 mit dem Flüssigkeitstank 664 verbunden, um in der Entlüftungsstellung 162B des 3/2-Wegeventils 162 einen Rückfluss der Reinigungsflüssigkeit F aus dem Zylinderinnenraum 228 in den Flüssigkeitstank 664 zu erlauben.

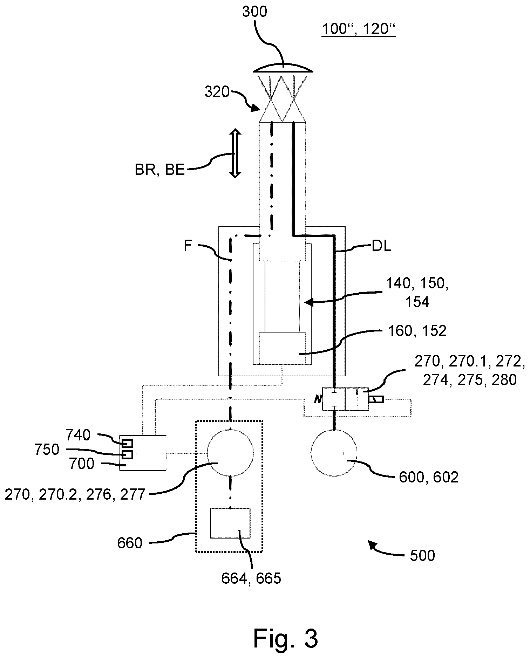

In Fig. 3 ist eine dritte bevorzugte Ausführungsform einer noch weiteren Reinigungsvorrichtung 100" eines noch weiteren Sensor- und Reinigungssystems 120" dargestellt, die sich von der in Fig. 1A gezeigten Reinigungsvorrichtung 100 insbesondere darin unterscheidet, dass der Stellaktor 140 als ein Linearantrieb 150 ausgebildet ist, der von einem als elektrischer Motor 152 ausgebildeten Schaltmittel 160 angetrieben wird. Der Linearantrieb 150 ist vorzugsweise als Spindelantrieb 154 gebildet. Mittels eines als Linearantrieb 150 ausgebildeten Stellaktors können vorteilhaft einzelne Düsenpositionen SD selektiv angefahren und gehalten werden. Somit sind vorteilhaft individuelle Bewegungsprofile der Reinigungsdüse 320 realisierbar.

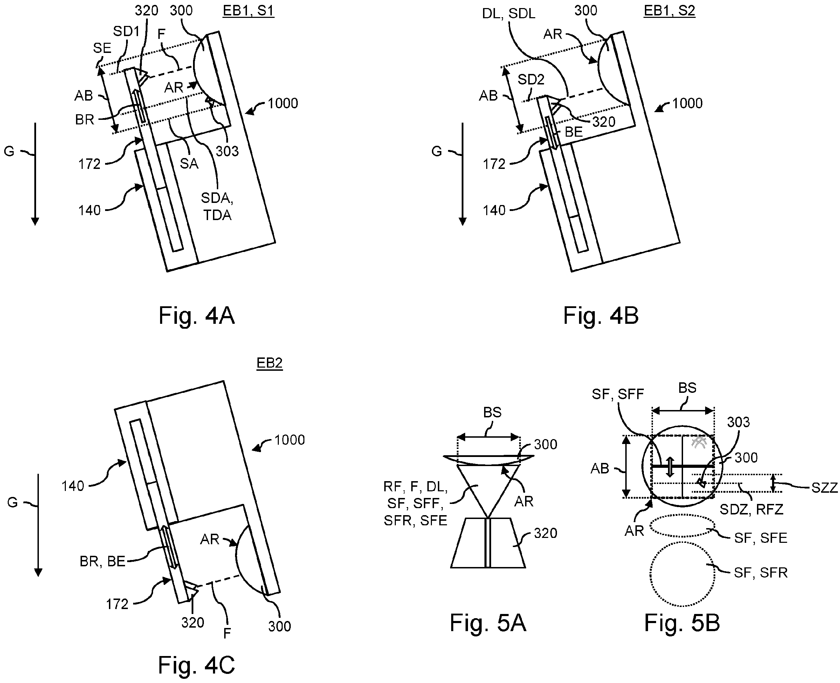

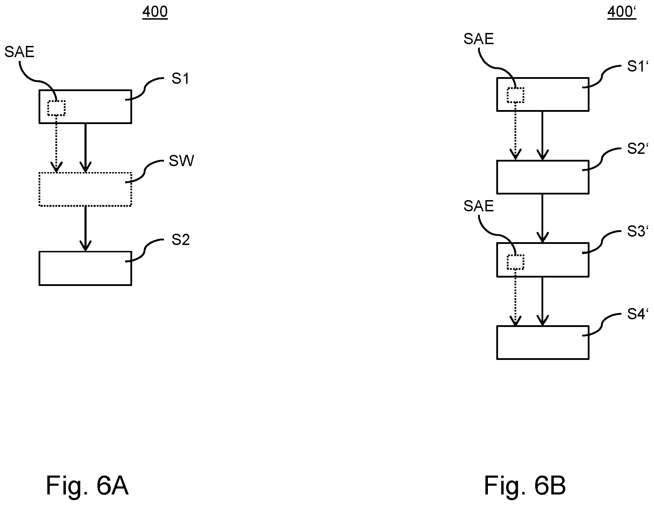

Fig. 4A und Fig. 4B zeigen schematisch eine mögliche erste Einbauposition EB1 einer Reinigungsvorrichtung 100, 100', 100" gemäß dem Konzept der Erfindung. Eine Einbauposition EB1, EB2 beschreibt insbesondere die Anordnung der Reinigungsvorrichtung 100, 100', 100" relativ zum Sensor 300 und relativ zur Richtung der Schwerkraft G. Zur Verdeutlichung eines bevorzugten Reinigungsverfahrens 400 ist in Fig. 4A beispielhaft ein Zustand während eines ersten Schrittes S1 und in Fig. 4B während eines zweiten Schrittes S2 dargestellt. Vorteilhaft ist die erste Einbauposition EB1 derart, dass die Reinigungsbewegung BR gegen oder nahezu gegen die Richtung der Schwerkraft G gerichtet ist (beispielsweise wie hier gezeigt mit einigen Grad Neigung zur Richtung der Schwerkraft G). In einer vorteilhaften Ausführungsform eines zusätzlich in Fig. 6A dargestellten Reinigungsverfahrens 400 erfolgt in einem ersten Schritt S1 über das Ansteuern des hier nicht gezeigten Schaltmittels 160 ein Erzeugen der Reinigungsbewegung BR, und vorteilhaft während der Reinigungsbewegung BR ein Beaufschlagen einer zu reinigenden Oberfläche AR eines Sensors 300 mit Reinigungsflüssigkeit F, indem ein Fluidstellmittel 270, insbesondere das zweite Fluidstellmittel 270.2, angesteuert wird. In Fig. 4A ist der Düsenschaft 172 in einer ersten Düsenposition SD1 kurz vor Erreichen der Endstellung SE gezeigt. Mit Erreichen der Endstellung SE wird vorteilhaft das Beaufschlagen mit Reinigungsflüssigkeit F durch ein entsprechendes Ansteuern des Fluidstellmittels 270, insbesondere des zweiten Fluidstellmittels 270.2, eingestellt.

Die Dauer des ersten Schritts S1 wird vorteilhaft durch die Dauer der Reinigungsbewegung BR, insbesondere durch das Ausfahren des Düsenschafts 172 von der Ausgangsstellung SA zur Endstellung SE, vorgegeben. Die Dauer der Reinigungsbewegung BR ist abhängig von der Ausfahrgeschwindigkeit des Kolbens, welche wiederum insbesondere von dem Aktuierungsdruck PR abhängig ist. Die Dauer der Reinigungsbewegung BR kann mehrere Sekunden, beispielsweise 3 Sekunden, betragen.

In einem anschließenden zweiten Schritt S2 erfolgt durch ein entsprechendes Ansteuern des Schaltmittels 160, insbesondere durch ein Entlüften des 3/2-Wegeventils 162, das Erzeugen einer Einfahrbewegung BE, und vorteilhaft während der Einfahrbewegung BE ein Beaufschlagen der zu reinigenden Oberfläche AR mit Druckluft DL, indem ein Fluidstellmittel 270, insbesondere das erste Fluidstellmittel 270.1 in Form des 2/2-Wegeventils 272, angesteuert wird. Mit Erreichen der Ausgangsstellung SA wird vorteilhaft das Beaufschlagen mit Druckluft DL durch ein entsprechendes Ansteuern des Fluidstellmittels 270, insbesondere des ersten Fluidstellmittels 270.1, eingestellt. Durch das gleichzeitige Durchführen der Einfahrbewegung BE und des Beaufschlagens mit Druckluft DL wird mit der gezeigten Anordnung der Reinigungsvorrichtung 100 vorteilhaft erreicht, dass die vorher auf die zu reinigende Oberfläche AR aufgebrachte Reinigungsflüssigkeit F zusammen mit der Schwerkraft G durch die Druckluft DL von der zu reinigenden Oberfläche AR entfernt wird. Dies bedeutet, dass sich ein von der Reinigungsdüse 320 abgegebener und auf die zu reinigende Oberfläche AR auftreffender Reinigungsfluidstrahl SF in Form eines Druckluftstrahls in Richtung der Schwerkraft G bewegt und die auf der zu reinigenden Oberfläche AR befindliche Reinigungsflüssigkeit F, vorteilhaft zusammen mit von der Reinigungsflüssigkeit F aufgeweichten Schmutzpartikeln 303, von der zu reinigenden Oberfläche AR schiebt oder bläst. Die Dauer des zweiten Schritts S2 ist vorteilhaft abhängig von der Dauer der Einfahrbewegung BE, welche wiederum insbesondere abhängig ist von der Rückstellfeder 170. Die Dauer der Einfahrbewegung BE kann mehrere Sekunden, beispielsweise 3 Sekunden, betragen.

Zwischen dem ersten Schritt S1 und dem zweiten Schritt S2 kann vorteilhaft ein Warteschritt SW vorgesehen werden, um vorteilhaft eine längere Einwirkdauer der Reinigungsflüssigkeit F, insbesondere ein Einweichen von Schmutzpartikeln auf der zu reinigenden Oberfläche AR, zu ermöglichen.

In einer vorteilhaften, optionalen Abwandlung des ersten Schritts S1 erfolgt die Reinigungsbewegung BR nicht bis zur Endstellung SE, sondern wird in einem Abbruchschritt SAE vorzeitig an einer Abbruch-Düsenposition SDA und/oder zu einem Abbruchzeitpunkt TDA beendet. Eine Abbruch-Düsenposition SDA kann insbesondere in Abhängigkeit einer Auswertung eines Sensorsignals 306 erfolgen, und insbesondere festgelegt werden, wenn das Vorhandensein von einem oder mehreren Schmutzpartikeln 303 auf der zu reinigenden Oberfläche AR festgestellt wurde, und deren Position mit einer bestimmten Düsenposition SD korrespondiert. Diese Düsenposition SD wird als Abbruch-Düsenposition SDA festgelegt, da ein Anfahren dieser Düsenposition durch die Reinigungsdüse ausreicht, um die Schmutzpartikel 303 zu entfernen.

Das gezielte Anfahren der Abbruch-Düsenposition SDA kann auf unterschiedliche Weise erfolgen. Vorteilhaft kann die Steuerung mittels eines Drucksensors 260 erfolgen, wobei ein gemessener Druckwert eines Aktuierungsdrucks PA mit einer Düsenposition SD korrespondiert, und über diesen Zusammenhang eine Abbruch-Düsenposition SDA als Sollwert in einen Druck-Sollwert übersetzt werden kann. Bei dem Erreichen des Druck-Sollwerts wird durch ein Ansteuern des Schaltmittels 160 die Reinigungsbewegung BR vorzeitig beendet.

Bei einem als Linearantrieb 150 ausgebildeten Stellaktors 140 und/oder einem als elektrische Motor 152 ausgebildeten Schaltmittels 160 kann ein Anfahren der Abbruch-Düsenposition SDA vorteilhaft über eine Motorsteuerung des elektrische Motor 152 gesteuert werden.

Alternativ oder zusätzlich kann vorteilhaft die erforderliche Düsenposition SD zum Erreichen der Abbruch-Düsenposition SDA über die bekannte Bewegungsgeschwindigkeit des Düsenschafts 172 und somit die Ausfahrdauer abgeschätzt werden. Hierbei wird die Abbruch-Düsenposition SDA in einen Zeit-Sollwert übersetzt, bei dessen Verstreichen durch ein Ansteuern des Schaltmittels 160 die Reinigungsbewegung BR vorzeitig beendet wird.

In Ausführungsformen kann die Reinigungsbewegung BR vorzeitig zu einem Abbruchzeitpunkt TDA beendet werden. Insbesondere wenn die Reinigungsvorrichtung 100 ausgebildet ist, das Vorhandensein von Schmutzpartikeln 303 auf der zu reinigenden Oberfläche AR in Echtzeit bzw. unter ausreichend geringer Verzögerung zu erkennen, kann zu dem Zeitpunkt, wenn das Entfernen der vorher erkannten Schmutzpartikel 303 durch die Auswertung des Sensorsignals 306 festgestellt wurde, die Reinigungsbewegung BR durch ein Ansteuern des Schaltmittels 160 vorzeitig beendet werden.

Das vorzeitige Beenden der Reinigungsbewegung BR erfolgt insbesondere durch ein entsprechendes Ansteuern des Schaltmittels 160, was ein vorzeitiges Einleiten der Einfahrbewegung BE zur Folge hat. Bei dem Vorhandensein von mehreren Schmutzpartikeln 303 oder Gruppen von Schmutzpartikeln 303 wird eine Abbruch-Düsenposition SDA angegeben, bei der bei einer - vorzeitig abzubrechenden - Reinigungsbewegung BR sämtliche Schmutzpartikel 303 erfasst werden. Die Abbruch-Düsenposition SDA entspricht in diesem Fall also dem in Richtung der Reinigungsbewegung BR äußersten Schmutzpartikel 303.

Ein Erkennen des Vorhandenseins von Schmutzpartikeln 303 - und insbesondere die Bestimmung einer zu der Position der Schmutzpartikel 303 korrespondierenden Abbruch-Düsenposition SDA - kann vorteilhaft in einer Abbruch-Bestimmungseinheit 740 erfolgen. Die Abbruch-Bestimmungseinheit 740 ist vorteilhaft in der Steuereinheit 700 oder in einer Fahrzeugsteuereinheit 1020 angeordnet. Durch ein solches, verschmutzungsabhängiges Reinigen durch ein Ausfahren nur bis zu einer Abbruch-Düsenposition SDA kann vorteilhaft Zeit und Reinigungsflüssigkeit F eingespart werden.

Vorteilhaft kann eine Reinigungsvorrichtung 100, insbesondere eine Steuereinheit 700 eine Ziel-Bestimmungseinheit 750 zum Erkennen des Vorhandenseins von Schmutzpartikeln 303 und zum Bereitstellen mindestens einer Ziel-Düsenposition SDZ und/oder mindestens einer Ziel-Düsenzone SZZ aufweisen. Auf Basis einer Ziel-Düsenposition SDZ und/oder einer Ziel-Düsenzone SZZ können vorteilhaft einzelne Bereiche der zu reinigenden Oberfläche AR mit Schmutzpartikeln 303 von der Reinigungsdüse 320 angefahren und in Reinigungsfluid RF sparender Weise angefahren werden.

Ein derartiges Bestimmen einer Abbruch-Düsenposition SDA und ein vorzeitiges Beenden der Reinigungsbewegung BR kann in analoger Weise optional in dem weiteren ersten Schritt S1' und dem weiteren dritten Schritt S3' des weiteren Reinigungsverfahrens 400` erfolgen.

Durch die unabhängige Ansteuerung von dem Schaltmittel und dem mindestens einen Fluidstellmittel sind mit einer Reinigungsvorrichtung 100 gemäß dem Konzept der Erfindung jedoch auch vorteilhaft andere Verfahrensarten flexibel umsetzbar.

Fig. 4C zeigt eine weitere vorteilhafte zweite Einbauposition EB2, die im Unterschied zu der in Fig. 4A und Fig. 4B gezeigten Einbauposition EB1 in vertikaler Richtung umgekehrt ist, derart, dass die Reinigungsbewegung BR mit oder nahezu mit der Richtung der Schwerkraft G erfolgt. Entsprechend erfolgt die entgegengesetzte Einfahrbewegung BE gegen oder nahezu gegen die Schwerkraft G. Mit einer derartigen zweiten Einbauposition EB2 kann vorteilhaft ein weiteres Reinigungsverfahren 400' durchgeführt werden, dass im Zusammenhang mit Fig. 6B näher erläutert wird.

Fig. 5A zeigt schematisch eine vorteilhafte Reinigungsdüse 320, die vorliegend ausgebildet ist zum Erzeugen eines Reinigungsfluidstrahls SF in Form eines Flachstrahls SFF. Ein Reinigungsfluidstrahl SF kann insbesondere sowohl Druckluft, als auch Reinigungsfluid, als auch eine Mischung von beiden oder anderen Reinigungsfluiden beispielsweise in Form eines Sprühnebels, umfassen.

Im Rahmen der Erfindung sind auch Reinigungsdüsen 320 möglich zum Erzeugen andersförmiger Reinigungsfluidstrahlen SF, beispielsweise eine Reinigungsdüse 320 zum Erzeugen eines Rundstrahls SFR oder eines elliptischen Strahl SFE. Ein Flachstrahl SFF weist eine sich - von der Reinigungsdüse 320 ausgehend - verbreiternde, flache Form auf, der im Wesentlichen linienförmig mit einer Strahlbreite BS auf die zu reinigende Oberfläche AR des Sensors 300 trifft. Dies ist insbesondere in der in Fig. 5B gezeigten Draufsicht auf die Oberfläche des Sensors 300 erkennbar. Die durch den Stellaktor 140 erzeugbare Reinigungsbewegung BR mit dem Stellhub AB ermöglicht vorteilhaft das Bewegen des Reinigungsfluidstrahls SF, in Fig. 5B als Flachstrahl SFF gezeigt, über die Oberfläche des Sensors 300. Die zu reinigende Oberfläche AR wird somit durch die Strahlbreite BS und den, vorteilhaft senkrecht dazu verlaufenden, Stellhub AB festgelegt. Bei einem linienförmigen Flachstrahl SFF resultiert eine annähernd rechteckige zu reinigende Oberfläche AR. In Fig. 5B sind weiterhin gestrichelt die Formen optionaler anderer Reinigungsfluidstrahlen SF, nämlich die Form eines Rundstrahls SFR und eines elliptischen Strahls SFE, gezeigt, welche mit einer entsprechenden Reinigungsdüse 320 in analoger Weise in einer Reinigungsbewegung BR über die Oberfläche des Sensors 300 bewegt werden können.

Insbesondere sind durch die unabhängige Ansteuerung von dem Schaltmittel und dem mindestens einen Fluidstellmittel Ausführungsformen möglich, bei denen ein selektives Beaufschlagen mit einem oder mehreren Reinigungsfluiden an einen oder mehreren einzelnen Ziel-Düsenpositionen SDZ erfolgen kann, vorteilhaft zum Lösen einzelner, lokaler Schmutzpartikel 303. Besonders vorteilhaft ist auch ein selektives Beaufschlagen mit einem oder mehreren Reinigungsfluiden von mehreren, zusammenhängenden Ziel-Düsenpositionen SDZ, möglich, die zusammen eine Ziel-Düsenzone SZZ bilden. In Fig. 5B ist beispielhaft eine Ziel-Düsenposition SDZ dargestellt, die an einer lokalen Ansammlung von Schmutzpartikeln 303 liegt. Weiter ist dort eine Ziel-Düsenzone SZZ dargestellt, die die Schmutzpartikel 303 umgibt. Vorteilhaft kann eine oder mehrere Ziel-Düsenpositionen SDZ oder eine oder mehrere Ziel-Düsenzone SZZ mittels einer Ziel-Bestimmungseinheit 750 bestimmt werden, welche ausgebildet ist, auf der Basis des Kamerasignals 306 Schmutzpartikel 303 und deren Position auf der zu reinigenden Oberfläche AR zu erkennen, und in Abhängigkeit dieser Positionen der Schmutzpartikel 303 eine oder mehrere Ziel-Düsenpositionen SDZ, oder eine oder mehrere Ziel-Düsenzonen SZZ, bereitzustellen.

Mittels dem selektiven Ansteuern von mindestens einer Ziel-Düsenpositionen SDZ oder mindestens einer Ziel-Düsenzone SZZ kann vorteilhaft über den Ausfahrweg in mehreren Impulsen gereinigt werden, insbesondere wenn nicht überall Verschmutzungen bzw. Schmutzpartikel vorhanden sind.

Vorteilhaft kann die Ziel-Bestimmungseinheit 750 ausgebildet sein zum Bestimmen einer Ziel-Reinigungsfluidmenge RFZ, die an einer Ziel-Düsenposition SDZ oder einer Ziel-Düsenzone SZZ beaufschlagt wird. Die Ziel-Reinigungsfluidmenge RFZ kann vorteilhaft in Abhängigkeit der Verschmutzung, insbesondere der Größe des Schmutzpartikels 303 oder der Anordnung von Schmutzpartikeln 303, bestimmt werden.

Beispielsweise kann in der Reinigungsbewegung BR nach 1cm Ausfahrweg an einer ersten Ziel-Düsenposition SDZ eine erste Ziel-Reinigungsfluidmenge RFZ von 1 ml und nach 4 cm Ausfahrweg an einer zweiten Ziel-Düsenposition SDZ eine zweite Ziel-Reinigungsfluidmenge RFZ von 2 ml Reinigungsflüssigkeit beaufschlagt werden in der Einfahrbewegung die Luftreinigung an den beiden Ziel-Düsenpositionen SDZ entsprechend durchgeführt werden. Die Ziel-Düsenposition SDZ und die Ziel-Reinigungsfluidmenge RFZ kann individuell je nach erkannter Verschmutzung frei bestimmt werden.

In Fig. 6A ist eine Ausführungsform eines bevorzugten Reinigungsverfahrens 400 wie bereits oben beschrieben dargestellt.

In Fig. 6B ist eine weitere Ausführungsform eines bevorzugten weiteren Reinigungsverfahrens 400' dargestellt. In einem weiteren ersten Schritt S1' erfolgt ein Ausfahren der Reinigungsdüse 320 in einer Reinigungsbewegung BR, insbesondere durch ein Ansteuern des Schaltmittels 160, und ein gleichzeitiges Beaufschlagen der zu reinigenden Oberfläche AR mit einer Reinigungsflüssigkeit F, insbesondere durch ein Ansteuern des zweiten Fluidstellmittels 270.2. Mit dem Erreichen der Endstellung ES wird insbesondere das Beaufschlagen mit der Reinigungsflüssigkeit F eingestellt.

In einem weiteren zweiten Schritt S2' erfolgt ein Einfahren der Reinigungsdüse 320 in einer Einfahrbewegung BE, insbesondere durch ein Ansteuern des Schaltmittels 160, vorteilhaft ohne dass ein Beaufschlagen mit einem Reinigungsfluid RF erfolgt.

In einem weiteren dritten Schritt S3' erfolgt ein erneutes Ausfahren der Reinigungsdüse 320 in einer Reinigungsbewegung BR, insbesondere durch ein Ansteuern des Schaltmittels 160, und ein gleichzeitiges Beaufschlagen der zu reinigenden Oberfläche AR mit Druckluft DL, insbesondere durch ein Ansteuern des ersten Fluidstellmittels 270.1.

In einem weiteren vierten Schritt S4' erfolgt ein erneutes Einfahren der Reinigungsdüse 320 in einer Einfahrbewegung BE, insbesondere durch ein Ansteuern des Schaltmittels 160. Mit dem Erreichen der Endstellung ES wird insbesondere das Beaufschlagen mit Druckluft DL eingestellt.

In dem weiteren Reinigungsverfahren 400' kann zwischen den Schritten S1' bis S4' an einer oder mehreren Stellen ebenfalls ein Warteschritt SW vorgesehen werden.

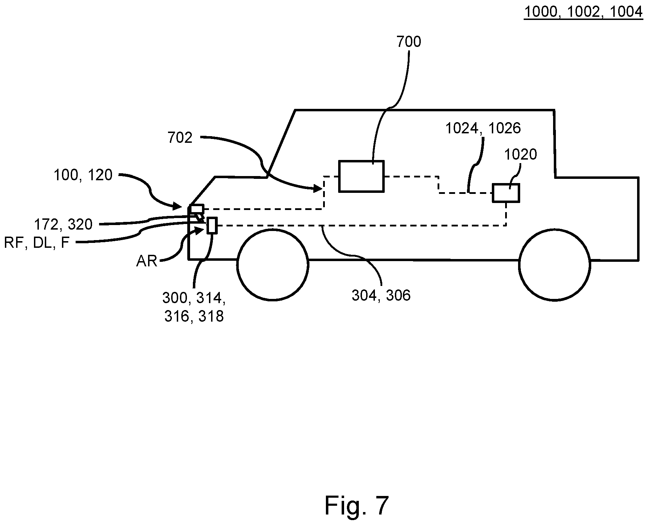

Fig. 7 zeigt ein Fahrzeug 1000, vorliegend einen Pkw 1002, mit einer Reinigungsvorrichtung 100 gemäß dem Konzept der Erfindung. In anderen bevorzugten Ausführungsformen kann das Fahrzeug 1000 als Nutzfahrzeug 1004 gebildet sein. Das Fahrzeug 1000 weist im vorderen Bereich einen Sensor 300, beispielsweise eine Kamera 314, auf, in dessen Nähe eine Reinigungsvorrichtung 100 gemäß dem Konzept der Erfindung mit einer durch einen Stellaktor 140 bewegbaren Reinigungsdüse 320 angeordnet ist. Mittels der Reinigungsvorrichtung 100 kann eine zu reinigende Fläche AR des Sensors 300 gereinigt werden. Die Reinigungsvorrichtung 100 weist weiter eine elektrische Steuereinheit 700 auf oder ist einer solchen zugeordnet. Die elektrische Steuereinheit 700 ist ausgebildet zum Ansteuern der Reinigungsvorrichtung 100, insbesondere zum Ansteuern des Schaltmittels 160 und des mindestens einen Fluidstellmittels 270, und ist hierzu mittels mindestens einer Steuerleitung 702 mit der Reinigungsvorrichtung 100 signalführend verbunden.

Das Fahrzeug 1000 weist weiterhin eine Fahrzeugsteuereinheit 1020 auf zum Bereitstellen wesentlicher Fahrzeugfunktionen. Die Fahrzeugsteuereinheit 1020 ist vorteilhaft über eine Fahrzeugsteuerleitung 1024 mit der Steuereinheit 700 der Reinigungsvorrichtung 100 signalführend verbunden. Auf diese Weise kann die Reinigungsvorrichtung 100 vorteilhaft von der Fahrzeugsteuereinheit 1020 gesteuert werden, beispielsweise in dem ein Reinigungsverfahren 400, 400' aufgerufen wird. Die Fahrzeugsteuerleitung 1024 kann vorteilhaft als Fahrzeugbusleitung 1026, beispielsweise als CAN-Bus, ausgebildet sein. Der Sensor 300 ist vorteilhaft über eine Sensorleitung 304 signalführend mit der Fahrzeugsteuereinheit 1020 zum Übermitteln eines Sensorsignals 306 verbunden.

Der Sensor 300 kann insbesondere als Kamera 314, LIDAR-Sensor 316, Ultraschallsensor 318 oder dergleichen Sensor gebildet sein.

### BEZUGSZEICHENLISTE (Teil der Beschreibung)

100, 100', 100" Reinigungsvorrichtung
120, 120', 120" Sensor- und Reinigungssystem
140 Stellaktor
142 Druckzylinder
148 Druckeingang
150 Linearantrieb
152 Motor
154 Spindelantrieb
160 Schaltmittel
162 3/2-Wegeventil
162.1 erster Anschluss des 3/2-Wegeventils
162.2 Anschluss des 3/2-Wegeventils
162.3 Anschluss des 3/2-Wegeventils
162A Belüftungsstellung des 3/2-Wegeventils
162B Entlüftungsstellung des 3/2-Wegeventils
164 3/2-Wege-Magnetventil
166 pneumatisches 3/2-Wegeventil
168 hydraulisches 3/2-Wegeventil
170 Rückstellfeder
172 Düsenschaft
222 Zylindergehäuse
224 Innenwandung
226 Druckstempel
228 Zylinderinnenraum
260 Drucksensor
270 Fluidstellmittel
270.1 erstes Fluidstellmittel
270.2 zweites Fluidstellmittel
272 Fluidventil
274 2/2-Wegeventil
274.1 erster Anschluss des 2/2-Wegeventils
274.2 zweiter Anschluss des 2/2-Wegeventils
274A Sperrstellung des 2/2-Wegeventils
274B Öffnungsstellung des 2/2-Wegeventils
275 2/2-Wege-Magnetventil
276 Pumpe
276.1 Pumpenausgang
277 elektrische Pumpe
280 pneumatisches 2/2-Wege-Magnetventil
282 hydraulisches 2/2-Wege-Magnetventil
300 Sensor
303 Schmutzpartikel
304 Sensorleitung
306 Sensorsignal
314 Kamera
316 LIDAR-Sensor
318 Ultraschallsensor
320 Reinigungsdüse
320.1 erste Reinigungsdüse
320.2 zweite Reinigungsdüse
332 Fluidleitung
334 Druckluft-Fluidleitung
336 Flüssigkeits-Fluidleitung
400' Reinigungsverfahren
400 weiteres Reinigungsverfahren
500 Versorgungseinrichtung
600 Druckluftquelle
602 Kompressor
660 Flüssigkeitsquelle
664 Flüssigkeitstank
665 Wischwassertank
667 Rückflussleitung
680 Entlüftung
682 Umgebung
700 Steuereinheit
702 Steuerleitung
740 Abbruch-Bestimmungseinheit
750 Ziel-Bestimmungseinheit
1000 Fahrzeug
1002 Pkw
1004 Nutzfahrzeug
1020 Fahrzeugsteuereinheit
1024 Fahrzeugsteuerleitung
1026 Fahrzeugbusleitung
AB Stellhub
AR zu reinigende Oberfläche
BE Einfahrbewegung
BR Reinigungsbewegung
BS Strahlbreite
DL Druckluft
EB Einbauposition
EB1, EB2 erste, zweite Einbauposition
F Reinigungsflüssigkeit
FA Stellkraft
FR Rückstellkraft
G Schwerkraft
S1, S2 erster, zweiter Schritt
S1', S2`, S3`, S4' erster bis vierter weiterer Schritt
SW Warteschritt
SA Ausgangsstellung
SD Düsenposition
SDA Abbruch-Düsenposition
SDZ Ziel-Düsenposition
SE Endstellung
SF Reinigungsfluidstrahl
SFE elliptischer Strahl
SFF Flachstrahl
SFR Rundstrahl
SZZ Ziel-Düsenzone
TDA Abbruchzeitpunkt
RF Reinigungsfluid
RF1, RF2 erstes, zweites Reinigungsfluid
RFZ Ziel-Reinigungsfluidmenge
ZA Zylinderachse

## Patentansprüche

1. Reinigungsvorrichtung (100) für einen Sensor (300), insbesondere eines Fahrzeugs (1000), wobei die Reinigungsvorrichtung (100) aufweist:
- mindestens eine Reinigungsdüse (320), ausgebildet zum Beaufschlagen einer zu reinigenden Oberfläche (AR) des mindestens einen Sensors (300) mit einem Reinigungsfluid (RF, DL, F),
- ein Fluidstellmittel (270), insbesondere ein Fluidventil (272) oder eine Pumpe (276), ausgebildet zum selektiven Bereitstellen des Reinigungsfluids (RF) an die Reinigungsdüse (320),
- einen Stellaktor (140) zum Erzeugen einer Reinigungsbewegung (BR) der Reinigungsdüse (320),
wobei
- die Reinigungsvorrichtung (100) ein Schaltmittel (160) zum Steuern des Stellaktors (140) aufweist, derart, dass
- die Reinigungsbewegung (BR) unabhängig von dem Fluidstellmittel (270) erzeugt werden kann,
**dadurch gekennzeichnet, dass**
- der Stellaktor (140) als fluidischer Druckzylinder (142), insbesondere pneumatischer Druckzylinder (144), ausgebildet ist mit einem Druckeingang (148) zum Aufnehmen eines Aktuierungsdrucks (PA) zum Erzeugen der Reinigungsbewegung (BR), wobei unter Druck stehendes Reinigungsfluid (RF, DL, F) am Druckeingang (148) aufgenommen ist.

2. Reinigungsvorrichtung (100) nach Anspruch 1, **dadurch gekennzeichnet, dass**
- die Reinigungsvorrichtung (100) ein erstes Fluidstellmittel (270.1, 272) für ein erstes Reinigungsfluid (RF1, DL) und ein zweites Fluidstellmittel (270.2, 276) für ein zweites Reinigungsfluid (RF2, F) aufweist.

3. Reinigungsvorrichtung (100) nach Anspruch 1 oder 2, **dadurch gekennzeichnet, dass**
- das Reinigungsfluid (RF), insbesondere das erste Reinigungsfluid (RF1), Druckluft (DL) ist und
- das Fluidstellmittel (270), insbesondere das erste Fluidstellmittel (270.1, 272), ein 2/2-Wegeventil (274) ist.

4. Reinigungsvorrichtung (100) nach einem der vorherigen Ansprüche, **dadurch gekennzeichnet, dass**
- das Reinigungsfluid (RF), insbesondere das zweite Reinigungsfluid (RF2), eine Reinigungsflüssigkeit (F) ist und
- das Fluidstellmittel (270), insbesondere das zweite Fluidstellmittel (270.2, 276), eine Pumpe (276) und/oder ein 2/2-Wegeventil (274) ist.

5. Reinigungsvorrichtung (100) nach einem der vorherigen Ansprüche, **dadurch gekennzeichnet, dass**
- das Schaltmittel (160) ein 3/2-Wegeventil (162) ist.

6. Reinigungsvorrichtung (100) nach einem der vorherigen Ansprüche, **dadurch gekennzeichnet, dass**
- der Stellaktor (140) eine Rückstellfeder (170) aufweist, die sich gegen die Reinigungsbewegung (BR) verformt und ausgebildet ist zum Erzeugen einer Einfahrbewegung (BE).

7. Reinigungsvorrichtung (100) nach einem der Ansprüche 1 bis 4, **dadurch gekennzeichnet, dass**
- der Stellaktor (140) als Linearantrieb (150) ausgebildet ist, wobei der Linearantrieb (150) ausgebildet ist zum Erzeugen der Reinigungsbewegung (BR), und
- das Schaltmittel (160) als elektrischer Motor (152) ausgebildet ist.

8. Reinigungsvorrichtung (100) nach einem der vorherigen Ansprüche, **gekennzeichnet durch**
- eine Steuereinheit (700) zum Steuern des Schaltmittels (160) und des mindestens einen Fluidstellmittels (270), insbesondere zum Ausführen eines Reinigungsverfahrens (400, 400') durch das zeitlich getaktete Steuern des Schaltmittels (160) und des Fluidstellmittels (270).

9. Reinigungsvorrichtung (100) nach einem der vorherigen Ansprüche, **gekennzeichnet durch**
- eine Abbruch-Bestimmungseinheit (740), die ausgebildet ist, in Abhängigkeit eines von dem Sensor (300) bereitgestellten Sensorsignals (306) eine Abbruch-Düsenposition (SDA) und/oder einen Abbruchzeitpunkt (TDA) anzugeben.

10. Reinigungs- und Sensorsystem (120) für ein Fahrzeug (1000), aufweisend einen Sensor (300) und eine Reinigungsvorrichtung (100) nach einem der vorherigen Ansprüche und eine Versorgungseinrichtung (500) und eine Steuereinheit (700), die zur Steuerung der Reinigungsvorrichtung (100) ausgebildet ist.

11. Reinigungs- und Sensorsystem (120) nach Anspruch 10, wobei die Versorgungseinrichtung (500) eine Druckluftquelle (600), insbesondere einen Kompressor (602) und/oder eine Flüssigkeitsquelle (660), insbesondere einen Flüssigkeitstank (664), aufweist.

12. Fahrzeug (1000), insbesondere Nutzfahrzeug (1002) oder PKW (1004), aufweisend eine Reinigungsvorrichtung (100) nach einem der vorherigen Ansprüche.

13. Verfahren (400, 400') zum Reinigen einer zu reinigenden Oberfläche (AR) eines Sensors (300) mit einer Reinigungsvorrichtung nach einem der Ansprüche 1 bis 11, **gekennzeichnet durch** die Schritte:
- Erzeugen einer Reinigungsbewegung (BR) einer Reinigungsdüse (320), und Beaufschlagen der zu reinigenden Oberfläche (AR) mit einem Reinigungsfluid (RF), insbesondere einer Reinigungsflüssigkeit (F) und/oder einer Druckluft (DL), während der Reinigungsbewegung (BR), insbesondere durchgehend während der vollständigen Reinigungsbewegung (BR) oder an mindestens einer Ziel-Düsenposition (SDZ) und/oder mindestens einer Ziel-Düsenzone (SZZ),
- Erzeugen einer, zur Reinigungsbewegung (BR) gegenläufigen, Einfahrbewegung (BE), und vorteilhaft Beaufschlagen der zu reinigenden Oberfläche (AR) mit einem Reinigungsfluid (RF), insbesondere einer Druckluft (DL), während der Einfahrbewegung (BE), insbesondere durchgehend während der vollständigen Einfahrbewegung (BE) oder an der mindestens einen Ziel-Düsenposition (SDZ) und/oder der mindestens einen Ziel-Düsenzone (SZZ).

14. Verfahren nach Anspruch 13, **dadurch gekennzeichnet, dass**
- die Reinigungsbewegung (BR) vorzeitig beendet wird in Abhängigkeit einer Abbruch-Düsenposition (SDA) und/oder eines Abbruchzeitpunkts (TDA).

## Claims

1. Cleaning apparatus (100) for a sensor (300), in particular of a vehicle (1000), the cleaning device (100) comprising:
- at least one cleaning nozzle (320) designed to apply a cleaning fluid (RF, DL, F) to a surface (AR) to be cleaned of the at least one sensor (300),
- a fluid supply means (270), in particular a fluid valve (272) or a pump (276), designed to selectively supply the cleaning fluid (RF) to the cleaning nozzle (320),
- an actuator (140) for generating a cleaning movement (BR) of the cleaning nozzle (320),
- the cleaning apparatus (100) having a switching means (160) for controlling the actuator (140) such that
- the cleaning movement (BR) can be generated independently of the fluid supply means (270),
**characterized in that**
- the actuator (140) is designed as a fluidic pressure cylinder (142), in particular a pneumatic pressure cylinder (144), having a pressure input (148) for receiving an actuating pressure (PA) for generating the cleaning movement (BR), pressurized cleaning fluid (RF, DL, F) being received at the pressure input (148).

2. Cleaning apparatus (100) according to claim 1, **characterized in that**
- the cleaning apparatus (100) has a first fluid supply means (270.1, 272) for a first cleaning fluid (RF1, DL) and a second fluid supply means (270.2, 276) for a second cleaning fluid (RF2, F).

3. Cleaning apparatus (100) according to either claim 1 or claim 2, **characterized in that**
- the cleaning fluid (RF), in particular the first cleaning fluid (RF1), is compressed air (DL) and
- the fluid supply means (270), in particular the first fluid supply means (270.1, 272), is a 2/2-way valve (274).

4. Cleaning apparatus (100) according to any of the preceding claims, **characterized in that**
- the cleaning fluid (RF), in particular the second cleaning fluid (RF2), is a cleaning liquid (F) and
- the fluid supply means (270), in particular the second fluid supply means (270.2, 276), is a pump (276) and/or a 2/2-way valve (274).

5. Cleaning apparatus (100) according to any of the preceding claims, **characterized in that**
- the switching means (160) is a 3/2-way valve (162).

6. Cleaning apparatus (100) according to any of the preceding claims, **characterized in that**
- the actuator (140) has a return spring (170) which deforms counter to the cleaning movement (BR) and is designed to generate a retraction movement (BE).

7. Cleaning apparatus (100) according to any of claims 1 to 4, **characterized in that**
- the actuator (140) is designed as a linear drive (150), the linear drive (150) being designed to generate the cleaning movement (BR), and
- the switching means (160) is designed as an electric motor (152).

8. Cleaning apparatus (100) according to any of the preceding claims, **characterized by**
- a control unit (700) for controlling the switching means (160) and the at least one fluid supply means (270), in particular for carrying out a cleaning method (400, 400') by time-clocked control of the switching means (160) and the fluid supply means (270).

9. Cleaning apparatus (100) according to any of the preceding claims, **characterized by**
- a termination determining unit (740) which is designed to indicate a termination nozzle position (SDA) and/or a termination time (TDA) depending on a sensor signal (306) provided by the sensor (300).

10. Cleaning and sensor system (120) for a vehicle (1000), comprising a sensor (300) and a cleaning apparatus (100) according to any of the preceding claims and a supply device (500) and a control unit (700) which is designed to control the cleaning apparatus (100).

11. Cleaning and sensor system (120) according to claim 10, wherein the supply device (500) has a compressed air source (600), in particular a compressor (602) and/or a liquid source (660), in particular a liquid tank (664).

12. Vehicle (1000), in particular a commercial vehicle (1002) or passenger car (1004), comprising a cleaning apparatus (100) according to any of the preceding claims.

13. Method (400, 400') for cleaning a surface (AR) to be cleaned of a sensor (300) using a cleaning apparatus according to any of claims 1 to 11, **characterized by** the steps of:
- generating a cleaning movement (BR) of a cleaning nozzle (320), and applying a cleaning fluid (RF), in particular a cleaning liquid (F) and/or compressed air (DL), to the surface (AR) to be cleaned during the cleaning movement (BR), in particular continuously during the complete cleaning movement (BR) or at at least one target nozzle position (SDZ) and/or at least one target nozzle zone (SZZ),
- generating a retraction movement (BE) in the opposite direction to the cleaning movement (BR), and advantageously applying a cleaning fluid (RF), in particular compressed air (DL), to the surface (AR) to be cleaned during the retraction movement (BE), in particular continuously during the complete retraction movement (BE) or at the at least one target nozzle position (SDZ) and/or the at least one target nozzle zone (SZZ).

14. Method according to claim 13, **characterized in that**
- the cleaning movement (BR) is terminated prematurely depending on a termination nozzle position (SDA) and/or a termination time (TDA).

## Revendications

1. Dispositif de nettoyage (100) pour un capteur (300), en particulier d'un véhicule (1000), dans lequel le dispositif de nettoyage (100) présente :
- au moins une buse de nettoyage (320), conçue pour l'exposition d'une surface (AR) à nettoyer de l'au moins un capteur (300) à un fluide de nettoyage (RF, DL, F),
- un moyen de régulation de fluide (270), en particulier une soupape de fluide (272) ou une pompe (276), conçu pour la fourniture sélective du fluide de nettoyage (RF) à la buse de nettoyage (320),
- un actionneur de régulation (140) pour la génération d'un mouvement de nettoyage (BR) de la buse de nettoyage (320),
dans lequel
- le dispositif de nettoyage (100) présente un moyen de commutation (160) pour la commande de l'actionneur de régulation (140), de telle sorte que
- le mouvement de nettoyage (BR) peut être généré indépendamment du moyen de régulation de fluide (270),
**caractérisé en ce que**
- l'actionneur de régulation (140) est conçu sous la forme d'un cylindre de pression fluidique (142), en particulier d'un cylindre de pression pneumatique (144), comportant une entrée de pression (148) pour la réception d'une pression d'actionnement (PA) pour la génération du mouvement de nettoyage (BR), dans lequel un fluide de nettoyage sous pression (RF, DL, F) est reçu au niveau de l'entrée de pression (148).

2. Dispositif de nettoyage (100) selon la revendication 1,
**caractérisé en ce que**
- le dispositif de nettoyage (100) présente un premier moyen de régulation de fluide (270.1, 272) pour un premier fluide de nettoyage (RF1, DL) et un second moyen de régulation de fluide (270.2, 276) pour un second fluide de nettoyage (RF2, F).

3. Dispositif de nettoyage (100) selon la revendication 1 ou 2,
**caractérisé en ce que**
- le fluide de nettoyage (RF), en particulier le premier fluide de nettoyage (RF1), est de l'air comprimé (DL) et
- le moyen de régulation de fluide (270), en particulier le premier moyen de régulation de fluide (270.1, 272), est une soupape à 2/2 voies (274).

4. Dispositif de nettoyage (100) selon l'une des revendications précédentes, **caractérisé en ce que**
- le fluide de nettoyage (RF), en particulier le second fluide de nettoyage (RF2), est un liquide de nettoyage (F) et
- le moyen de régulation de fluide (270), en particulier le second moyen de régulation de fluide (270.2, 276), est une pompe (276) et/ou une soupape à 2/2 voies (274).

5. Dispositif de nettoyage (100) selon l'une des revendications précédentes, **caractérisé en ce que**
- le moyen de commutation (160) est une soupape à 3/2 voies (162).

6. Dispositif de nettoyage (100) selon l'une des revendications précédentes, **caractérisé en ce que**
- l'actionneur de régulation (140) présente un ressort de rappel (170) qui se déforme à l'encontre du mouvement de nettoyage (BR) et qui est conçu pour la génération d'un mouvement d'entrée (BE).

7. Dispositif de nettoyage (100) selon l'une des revendications 1 à 4, **caractérisé en ce que**
- l'actionneur de régulation (140) est conçu comme un entraînement linéaire (150), dans lequel l'entraînement linéaire (150) est conçu pour la génération du mouvement de nettoyage (BR), et
- le moyen de commutation (160) est conçu comme un moteur électrique (152).

8. Dispositif de nettoyage (100) selon l'une des revendications précédentes, **caractérisé par**
- une unité de commande (700) pour la commande du moyen de commutation (160) et l'au moins un moyen de régulation de fluide (270), en particulier pour l'exécution d'un procédé de nettoyage (400, 400') en commandant de manière synchronisée le moyen de commutation (160) et le moyen de régulation de fluide (270).

9. Dispositif de nettoyage (100) selon l'une des revendications précédentes, **caractérisé par**
- une unité de détermination d'interruption (740) qui est conçue pour indiquer une position de buse d'interruption (SDA) et/ou un moment d'interruption (TDA) en fonction d'un signal de capteur (306) fourni par le capteur (300).

10. Système de nettoyage et de capteur (120) pour un véhicule (1000), présentant un capteur (300) et un dispositif de nettoyage (100) selon l'une des revendications précédentes et un dispositif d'alimentation (500) et une unité de commande (700) qui est conçue pour la commande du dispositif de nettoyage (100).

11. Système de nettoyage et de capteur (120) selon la revendication 10, dans lequel le dispositif d'alimentation (500) présente une source d'air comprimé (600), en particulier un compresseur (602) et/ou une source de liquide (660), en particulier un réservoir de liquide (664).

12. Véhicule (1000), en particulier véhicule utilitaire (1002) ou voiture (1004), présentant un dispositif de nettoyage (100) selon l'une des revendications précédentes.

13. Procédé (400, 400') pour le nettoyage d'une surface (AR) à nettoyer d'un capteur (300) avec un dispositif de nettoyage selon l'une des revendications 1 à 11, **caractérisé par** les étapes consistant à :
- la génération d'un mouvement de nettoyage (BR) d'une buse de nettoyage (320), et exposition de la surface (AR) à nettoyer à un fluide de nettoyage (RF), en particulier un liquide de nettoyage (F) et/ou de l'air comprimé (DL), pendant le mouvement de nettoyage (BR), en particulier de manière continue pendant le mouvement de nettoyage (BR) complet ou au niveau d'au moins une position de buse (SDZ) cible et/ou au moins une zone de buse (SZZ) cible,
- la génération d'un mouvement d'entrée (BE) en sens inverse du mouvement de nettoyage (BR), et avantageusement exposition de la surface (AR) à nettoyer à un fluide de nettoyage (RF), en particulier de l'air comprimé (DL), pendant le mouvement d'entrée (BE), en particulier de manière continue pendant le mouvement d'entrée (BE) complet ou au niveau de l'au moins une position de buse (SDZ) cible et/ou l'au moins une zone de buse (SZZ) cible.

14. Procédé selon la revendication 13, **caractérisé en ce que**
- le mouvement de nettoyage (BR) est arrêté prématurément en fonction d'une position de buse d'interruption (SDA) et/ou d'un moment d'interruption (TDA).
